# EUROPÄISCHE PATENTANMELDUNG

(11) **EP 2 527 546 A1**
(43) Veröffentlichungstag der Anmeldung: **28.11.2012**
(21) Anmeldenummer: 11004229.8
(22) Anmeldetag: 23.05.2011
(51) Int. Cl.: E03D 9/08, B01D 35/16, B01D 29/35

(54) **Duscheinrichtung für WCs oder Bidets**

(71) Anmelder: Geberit International AG, 8645 Jona (CH)
(72) Erfinder: Bachmann, Simon, 8620 Wetzikon (CH)
(74) Vertreter: Szynka, Dirk

(57) **Zusammenfassung**

Die Erfindung betrifft eine Duscheinrichtung für ein WC oder Bidet mit einem als Durchlauferhitzers ausgebildeten Wassererhitzer (2) mit einem stromabwärtigen mechanischen Partikelfilter (1), mittels dem das erwärmte Duschwasser vor der Abgabe gefiltert wird. So können Kalkablagerungen am Wassererhitzer (2), die sich lösen sofort wieder herausgefiltert werden, bevor sie den Sprühkopf der Duscheinrichtung beschädigen.

## Beschreibung

Die vorliegende Erfindung betrifft eine Duscheinrichtung sowie ein damit ausgestattetes WC (Wasserclosett) oder Bidet.

Duscheinrichtungen zum Säubern des menschlichen Unterleibs sind von Bidets und auch sogenannten Dusch-WCs mit integrierter Bidet-Funktion bekannt. Grundsätzlich geht es um eine In einer Bidet-Schüssel, WC-Schüssel oder deren Umgebung eingebaute Dusche, die Wasser mehr oder weniger von unten nach oben spritzen kann, um den Unterleib eines Benutzers zu treffen. Im Fall von Dusch-WCs, die in Fernost-Asien seit längerer Zeit gebräuchlich sind und in anderen Ländern, insbesondere in Mitteleuropa, zunehmend Verbreitung finden, können solche Duscheinrichtungen technisch relativ aufwendig ausgestaltet sein, zum Beispiel mit motorischen Duscharmen, Warmwassererzeugung durch Wassererhitzer, Föhneinrichtungen zur Trocknung etc.. Als Wassererhitzer sind im Wesentlichen elektrische Boiler und Durchlauferhitzer gebräuchlich, wobei die Boiler einen Wasservorrat längere Zeit oder dauernd bei erhöhter Temperatur vorhalten und die Durchlauferhitzer lediglich auf Bedarf hin durchlaufendes Wasser instantan erwärmen.

Da die Duscheinrichtungen und die damit ausgestatteten Bidets oder WCs technisch nicht ganz unaufwendige Geräte sind und zudem im Fall von Defekten durch ihren Funktionsausfall Ärger und durch die Notwendigkeit eines Ausbaus bzw. Technikerbesuchs vor Ort Aufwand verursachen, sind Aspekte der Dauerhaftigkeit und Zuverlässigkeit unter Vermeidung von Funktionsstörungen im Betrieb besonders wichtig.

Dementsprechend liegt der vorliegenden Erfindung das Problem zugrunde, eine solche Duscheinrichtung und ein entsprechend ausgestattetes WC und schließlich eine entsprechende Verwendung anzugeben, die die Zuverlässigkeit erhöhen und Funktionsstörungen vermeiden helfen.

Erfindungsgemäß ist hierzu vorgesehen, dass die Duscheinrichtung zusätzlich zu dem Wassererhitzer einen mechanischen Partikelfilter für Duschwasser aufweist, der im Unterschied zum Stand der Technik stromabwärts an dem Wassererhitzer angeschlossen ist und zum Filtern von durch den Wassererhitzer erwärmtem Duschwasser ausgelegt ist.

Daneben bezieht sich die Erfindung auch auf ein entsprechend ausgestaltetes WC und eine Verwendung der entsprechenden Duscheinrichtung für ein WC oder ein Bidet.

Der Erfindungsgegenstand unterscheidet sich somit vom Stand der Technik durch die Anordnung des Partikelfilters relativ zum Wassererhitzer, zum Beispiel zum Durchlauferhitzer. Konventionell ist eine stromaufwärtige Anordnung vorgesehen, um das Eindringen von Kalkpartikeln, Sandpartikeln und anderen Verunreinigungen in den Wassererhitzer zu verhindern. Die Erfinder sind hingegen der Ansicht, dass eine stromabwärtige Anordung sinnvoller ist. Das eigentlich gefährdete Bauteil ist nach seiner Ansicht der nachgeschaltete Duschkopf selbst, der mindestens Öffnungen mit kleinem Querschnitt aufweist und möglicherweise wegen bewegten Teilen oder anderen zusätzlichen Aspekten besonders empfindlich gegen Partikelverunreinigungen ist. Die Untersuchungen des Erfinders haben gezeigt, dass auch bei strornaufwärtigem Partikelfilter vor dem Wassererhitzer kein ausreichender Schutz des Duschkopfs gegeben ist, weil sich im Wassererhitzer selbst Kalkablagerungen bilden und in relevanter Größe lösen können.

Erfindungsgemäß ist ein zusätzlicher Partikelfilter stromaufwärts von dem Wassererhitzer weder zwingend vorgesehen noch ausgeschlossen. Er kann die Gesamtsituation durchaus verbessern, weil ein versorgungsleitungsseitiger Eintrag von Partikeln vermieden oder verringert werden kann.

Der Partikelfilter kann an sich konventionell ausgestaltet sein. Es kann sich also beispielsweise um einen Filter mit wechselbaren Einsätzen oder mit zur Reinigung entnehmbaren Einsätzen handeln. Grundsätzlich muss nämlich bei Partikelfiltern von einem Wartungs- oder Wechselbedarf ausgegangen werden, weil die aufgesammelten Partikel die den Filter auszeichnenden Öffnungen (in einem Sieb, Netz oder in einer Wand) zusetzen und damit allmählich den Strömungswiderstand erhöhen.

Erfindungsgemäß bevorzugt ist jedoch ein ohne Entnahme eines Teils reinigbarer Partikelfilter. Insbesondere ist daran gedacht, den Filter dadurch zu spülen, dass die Strömung durch eine Partikelabführöffnung geführt wird, die gewöhnlich versperrt ist. Dabei kann die für das gefilterte Wasser vorgesehene Abflussöffnung versperrt oder geöffnet sein. Jedenfalls kommt es zu einer Umlenkung des Wasserstroms, sodass Partikel aus einem Raum stromaufwärts von den Filteröffnungen mit der umgelenkten Strömung aus der erwähnten Partikelabführöffnung ausgestoßen werden können, beispielsweise in die Bidet- oder WC-Schüssel,

Weiterhin kann diese Ausgestaltung des Partikelfilters ein mit den Filteröffnungen versehenes Rohrstück aufweisen, insbesondere koaxial in einem zylindrischen Filtergehäuse angeordnet. Der Wasserzufluss mündet dann in das Rohrstück, sodass das Wasser durch die Filteröffnungen in dem Rohr in einen das Rohrstück umgebenden Raum und von diesem aus durch einen Filterabfluss aus dem Filtergehäuse gelangt. Die Abführöffnung für die Partikel, also die Spülöffnung, kann dann an dem zu dem Zulauf entgegengesetzten Rohrende vorgesehen sein, sodass eine axiale Strömung entlang des Rohres die Partikel aus dieser Abführöffnung spült. Zur Illustration wird auf das Ausführungsbeispiel verwiesen.

Die Erfindung betrifft Duscheinrichtungen mit Wassererhitzern im Allgemeinen, also insbesondere auch mit Boilern, wenngleich Durchlauferhitzer bevorzugt sind. Im Folgenden wird der Einfachheit halber von einem Durchlauferhitzer gesprochen, wobei sich die Aussagen grundsätzlich im Allgemeinen auf Wassererhitzer beziehen.

Bevorzugt ist eine Ausgestaltung mit einem unteren und einem davon verschiedenen oberen Abfluss. Dabei soll der obere Abfluss höher liegen als der untere und vorzugsweise innerhalb der obersten 10 %, 5 %. 2 % oder 1 % der Gesamthöhe des Wasservolumens im Wassererhitzer. Dabei sollen die Abläufe und Zuläufe nicht zum Wasservolumen hinzugerechnet werden, das Wasservolumen ist also bis zum Ende von Zuläufen bzw. Beginn von Abläufen zu verstehen. Umgekehrt soll der untere Abfluss vorzugsweise innerhalb der untersten 10 %, 5 %, 2 % oder 1 % liegen, wobei in beiden Fällen die angegebenen Grenzwerte in der angegebenen Reihenfolge zunehmend bevorzugt sind.

Mit dieser Aufteilung auf zwei Abläufe wird angestrebt, dass Partikel, insbesondere Kalk, durch Sedimentierung im unteren Bereich des Wasservolumens im Durchlauferhitzer bleiben und dann nur durch den unteren, aber nicht durch den oberen Wasserablauf mitgenommen werden. Umgekehrt werden Luftblasen ausschließlich mit dem oberen Wasserablauf abgeführt, weil sie gravitationsbedingt im Wasservolumen oben schweben.

Im Bedarfsfall kann anschließend an den oberen Wasserablauf eine Entlüftungseinrichtung vorgesehen sein. Dies ist aber nicht zwingend notwendig. Insbesondere kann die Duscheinrichtung so ausgelegt sein, dass selbst bei einem Außerfunktionsetzen des oberen Wasserablaufs durch ein luftgefüllten Hohlraum, der untere Wasserablauf und die sich daran anschließende Leitung genügen und dementsprechend auch als Hauptleitung dimensioniert sind.

Umgekehrt sorgt die tiefe Anordnung des unteren Wasserablaufs dafür, dass der Durchlauferhitzer selbst nur begrenzt Partikelsedimente ansammelt und Partikel in stärkerem Maße dem stromabwärts vorgesehenen Partikelfilter zugeführt werden als bei einer abweichenden Anordnung.

Vorzugsweise sind die Abflüsse des Durchlauferhitzers ihrer Anordnung entsprechend ausgerichtet, weist also der obere Abfluss nach oben und der untere nach unten. Sie sollen dazu einen Winkel von mindestens 30°, 45°, 60° oder sogar mindestens 75° zur Horizontalen bilden. Durch diese Ausrichtung können die Partikel bzw. Luftblasen besser abgeführt werden.

Ferner soll sich der Leitungsquerschnitt des oberen Abflusses vorzugsweise in einem gewissen Abstand von dem Wassevolumen des Durchlauferhitzers deutlich verjüngen. Der Abstand sollte mindestens dem anfänglichen mittleren Durchmesser des Abflusses entsprechen und die Verjüngung sollte mindestens 70 %, vorzugsweise sogar 80 % oder 90%, Querschnittsflächenverringerung bewirken. Durch die im Viergleich zum späteren Querschnitt sehr offene Bemessung des Abflusses können die Strämungsgeschwindlgkeiten dort gering gehalten werden. Damit lässt sich die Wahrscheinlichkeit eines Mitreißens von Partikeln weiter verringern. Andererseits bildet die dem oberen Abfluss nachfolgende Leitung vorzugsweise nur eine Zusatzleitung und übt die im unteren Abfluss nachgeordnete Leitung die Hauptleitungsfunktion aus bzw. genügt im Bedarfsfall schon allein.

Dementsprechend ist der Leitungsquerschnitt des unteren Abflusses bezogen auf die im Leitungsverlauf engste Stelle um mindestens 30 % größer als der des oberen Abfusses. Hier wird auf die engste Leitungsstelle bis zum Partikelfilter abgestellt. In Einzelfällen kann aber auch vorgesehen sein, die obere Leitung gar nicht an den Partikelfilter oder einen (vielleicht auch eigenen) Partikelfilter anzuschließen. Dann bezieht sich diese Aussage auf den Leitungsverlauf des oberen Abflusses bis zum Duschkopf.

Bevorzugt ist allerdings eine Zusammenführung der an den unteren und an den oberen Abfluss anschließenden Leitungen vor dem Partikelfilter, wie im Ausführungsbeispiel dargestellt.

Die konkrete bauliche Ausgestaltung kann den Partikelfilter, d. h. konkret sein Gehäuse, und den Wassererhitzer, also insbesondere das Durchlauferhitzergehäuse, als im Wesentlichen zylindrische Körper aufweisen, die parallel und baulich verbunden sind. Vorzugsweise handelt es sich dabei um einstückig ausgeführte Spritzgussgehäuse.

Der Durchlauferhitzer, und hier ist tatsächlich ein Durchlauferhitzer und nicht allgemein ein Wassererhitzer gemeint, weist vorzugsweise als Wärmequelle ein durchströmtes Rohrstück auf. Dieses kann zu einem Durchlauferhitzergehäuse koaxial und parallel angeordnet sein. Jedenfalls wird es von einem Wasserzulauf in seinem Inneren angeströmt und das Wasser strömt durch das Rohrstück bis zu dessen relativ zum Zulauf distalen Ende. Dort hält das Rohrstück einen Abstand von der benachbarten Innenwand, sodass das Wasser das Rohrende umströmen und in einen das Rohrstück umgebenden Raum gelangen kann. Dort kann es mit entgegengesetzter Richtung zurückströmen und aus einem Abfluss austreten. Die umgekehrte Durchströmungsrichtung ist ebenso möglich

Bevorzugt ist das Rohrstück aus Keramik gefertigt und wird in an sich bekannter Weise durch eine elektrische Widerstandsheizung geheizt.

Die Rohrgeometrie der gerade beschriebenen Wärmequelle des Durchlauferhitzers und die ansatzweise vergleichbare Rohrgeometrie des die Filteröffnungen aufweisenden Rohrstückes in dem Partikelfilter kann vorteilhaft so ausgestaltet sein, dass die Rohrstücke bzw. eines davon durch eine Außenwandüffnung des entsprechenden Gerätegehäuses hindurch eingebaut sind, wobei ein einstückig an dem Rohr stück angeformter Flansch an eine Fläche des Gehäuses angedrückt wird. Zur Veranschaulichung wird auf das Ausführungsbeispiel verwiesen.

Die Erfindung betrifft auch die Gebrauchseigenschaften und die Zuverlässigkeit des WCs oder Bidets insgesamt, sodass sie sich auch hierauf richtet. Das beinhaltet die entsprechende Verwendung der erfindungsgemäßen Duscheinrichtung.

Im Folgenden wird die Erfindung anhand des Ausführungsbeispiels näher erläutert, wobei die einzelnen Merkmale auf alle Anspruchskategorlen bezogen sind und auch In anderen Kombinationen erfindungswesentlich sein können. Insbesondere können die Merkmale des Wassererhitzers gemäß der vorstehenden Beschreibung und der nachfolgenden Illustration und gemäß den Ansprüchen 5 bis 13, insbesondere die Merkmale des Anspruchs 5 für sich, auch ohne die erfindungsgemäße stromabwärtige Anordnung eines Partikelfilters bedeutsam sein. Die Offenbarung ist dementsprechend abstrahiert zu verstehen und die Aufstellung entsprechender Ansprüche, etwa im Rahmen einer Teilanmeldung, bleibt ausdrücklich vorbehalten.
- Figur 1: zeigt eine perspektivische Gesamtansicht einer erfindungsgemäßen Bau-einheit aus einem Durchlauferhitzer und einem Partikelfilter für eine Unter-leibsd uscheinrichtung,
- Figur 2: zeigt eine analoge Ansicht, jedoch mit veränderter Perspektive,
- Figur 3: entspricht perspektivisch Figur 2, zeigt aber die Baueinheit in getrennten Einzelteilen,
- Figur 4: zeigt einen Längsschnitt durch den Partikelfilter der Baueinheit aus den Figuren 1 bis 3,
- Figur 5: zeigt einen Längsschnitt durch den Durchlauferhitzer der Baueinheit aus den Figuren 1 bis 3.

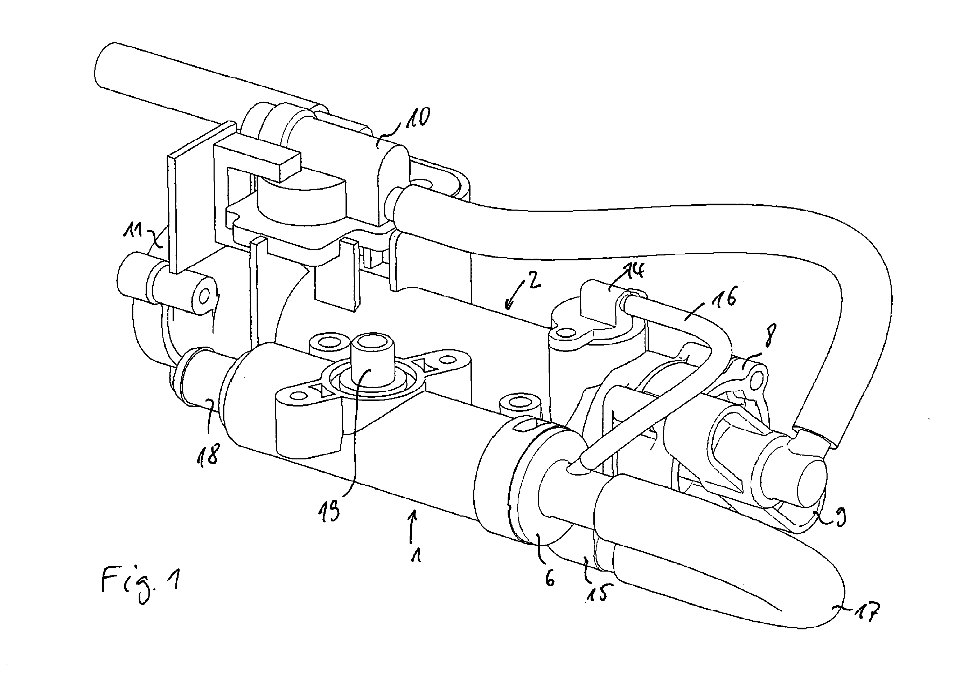

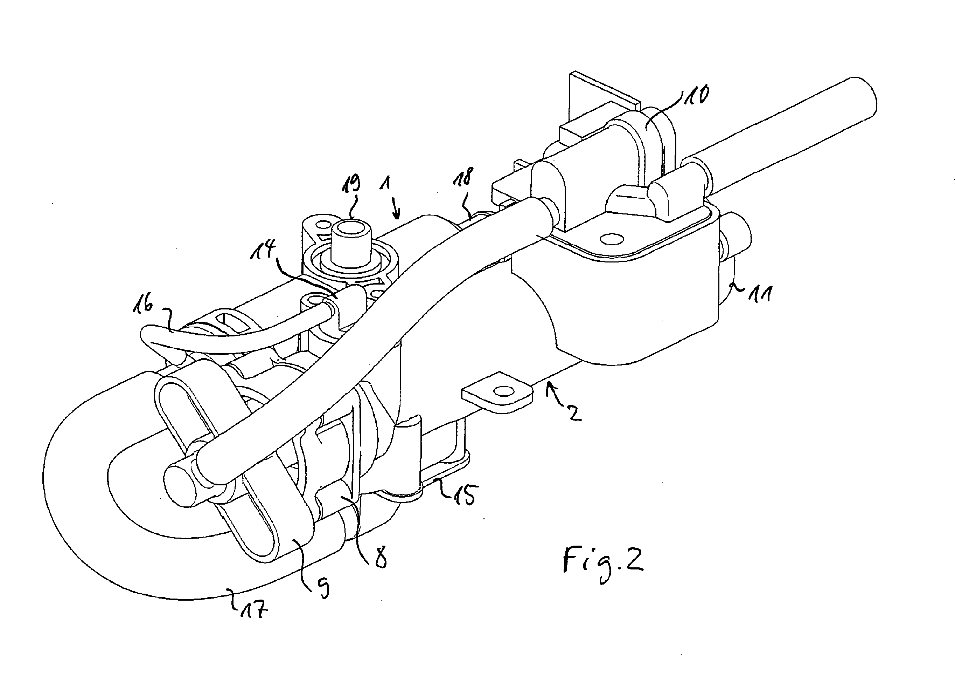

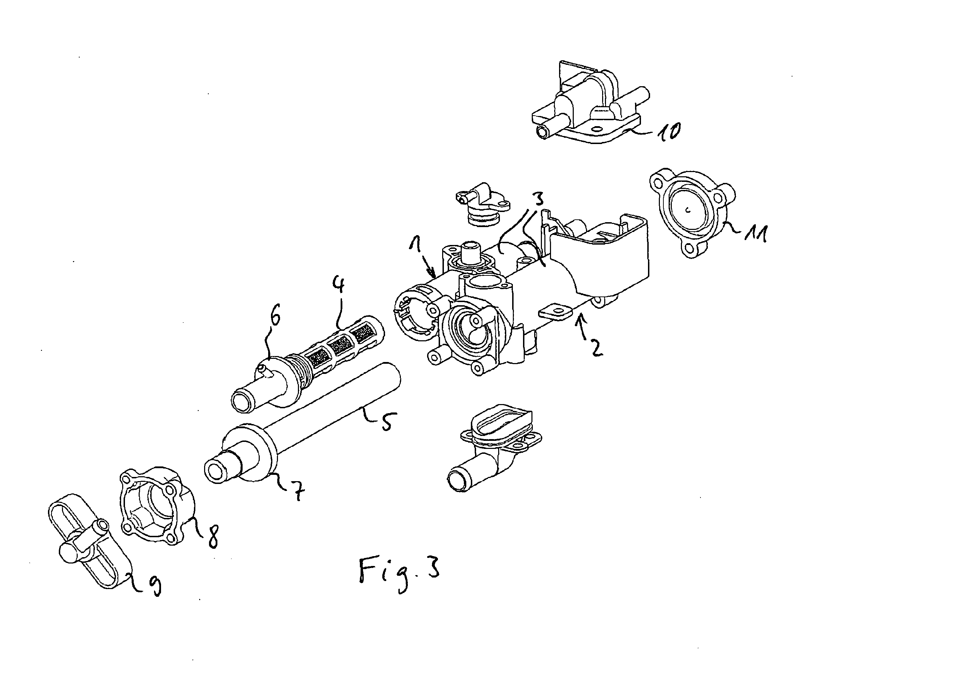

Das Ausführungsbeispiel veranschaulicht die Erfindung anhand eines erfindungswesentlichen Teils der Duscheinrichtung, nämlich einer Baueinheit mit einem Durchlauferhitzer und einem Partikelfilter. Die Figuren 1 und 2 zeigen die Baueinheit In zwei verschiedenen perspektivischen Ansichten; dabei liegt der mit 1 bezeichnete Partikelfilter in Figur 1 vorne und der mit 2 bezeichnete Durchlauferhitzer hinten, in Figur 2 verhält es sich umgekehrt. Figur 3 zeigt die Einzelteile voneinander getrennt und dabei insbesondere, dass es sich bei dem zentralen Bauteil 3 um eine einstückige Spritzgusseinheit mit zwei längsparallelen zylindrischen Gehäusen für einerseits den Partikelfilter 1 und andererseits den Durchlauferhitzer 2 handelt. Verschiedenste Anschlussflansche und weitere Teile sind ebenfalls einstückig angeformt.

Wie aus Figur 3 ersichtlich, sind in dieses zentrale Bauteil 3, und zwar konkret in die näherungsweise zylindrischen Hohlräume des Partikelfilters 1 und des Durchlauferhitzers 2, jeweils Rohrstücke 4 bzw. 5 eingesteckt, die durch einen jeweiligen Flansch 6 bzw. 7 an einer vor ihrer Montage nach außen gewandten Fläche des Bauteils 3 gehalten sind.

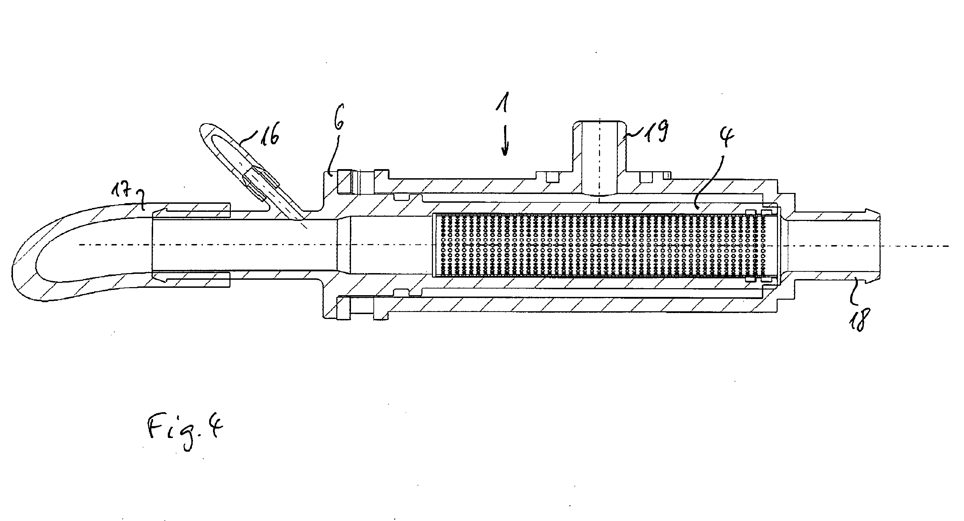

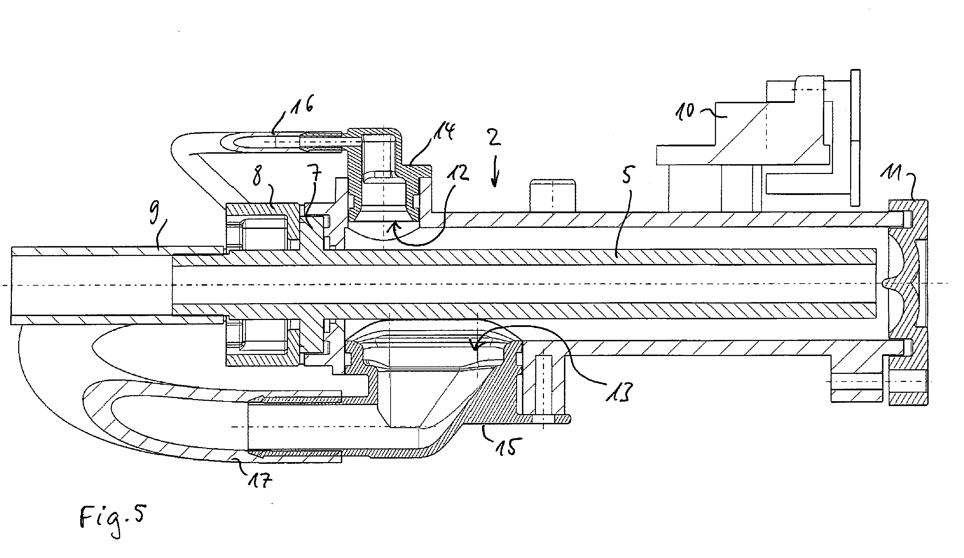

Figur 4 verdeutlicht dies für den Partikelfilter 1 und Figur 5 für den Durchlauferhitzer 2. Die Figuren 1 bis 3 und 5 zeigen ferner, dass außerhalb des Flansches 7 des Rohrstücks 5 eine Klemmrosette 8 und außerhalb derselben ein Zuleitungswasseranschluss 9 vorgesehen sind. An diesen Zuleitungswasseranschluss 9 führt ein Schlauchstück, ein Silikonschlauch wie alle weiteren in den Figuren dargestellten Schlauchstücke, das an einem Durchflussmesser 10 angeschlossen ist. Die Figuren 1 und 2 zeigen ferner, dass an diesem Durchflussmesser 10 ein weiteres Schlauchstück mit der eigentlichen Wasserzuleitung angeschlossen ist. Es weist in Figur 1 nach links oben und in Figur 2 nach rechts oben.

Das zugeleitete Frischwasser gelangt also über diese Leitung, den Durchflussmesser 10. das nächste Schlauchstück und den Wasseranschluss 9 in das Innere des Rohrstücks 5 des Durchlauferhitzers, vgl. Figur 5. Dieses Rohrstück 5 ist mit seinem Flansch 7 als Keramikbauteil ausgeführt und enthält eine nicht gezeichnete elektrische Widerstandsheizung. Das Wasser strömt also innerhalb des Rohrstücks 5 an einer geheizten Wand, nämlich der Innenmantelfläche des Rohrstücks 5, entlang bis zu dem distalen Ende, in Figur 5 rechts.

Dort ist das Bauteil 3, konkret das zylindrische Gehäuse des Durchlauferhitzers 2, mit einer Verschlusskappe 11 verschlossen, die durch ihre ringförmig konkave Innenform ein Umströmen des distalen Endes des Rohrstücks 5 erleichtert und die Wasserströmung in den Raum außerhalb des Rohrstücks 5 und in dem zylindrischen Durchlauferhitzergehäuse umlenkt. Dort strömt das Wasser an der geheizten Außenmantelfläche des Rohrstücks 5 entlang zurück.

Vor dem Ende dieses Raums außerhalb des Rohrstücks 5 und in dem Zylindergehäuse des Durchlauferhitzers 2 befinden sich zwei Abflüsse, ein oberer 12 und ein unterer 13. Sie sind im Wesentlichen durch von außen auf Anschlussflansche des zylindrischen Durchlauferhitzergehäuses aufgebrachte Anschlussnippel 14 und 15 definiert und führen das Wasser in daran anschließende Schlauchleitungen 16 und 17.

Ersichtlich ist der untere Abfluss 13 sowohl hinsichtlich der direkt an den beheizbaren Raum angeschlossenen Öffnung (mit 13 bezeichnet) als auch hinsichtlich der sich daran anschließenden Dimensionen des Anschlussnippels 15 und der Leitung 17 erheblich größer ausgestaltet als dies bei dem oberen Abfluss 12 der Fall ist. Insbesondere verjüngt sich der Strömungsquerschnitt hinter dem oberen Abfluss 12, und zwar ganz maßgeblich auf etwa ein 1/25. Bezogen auf den anfänglichen Strömungsquerschnitt vor dem Eintritt in den Anschlussnippel 14. Der Abstand bis zu dieser Leitungsquerschnittsverjüngung beträgt deutlich mehr als der anfängliche Leitungsdurchmesser (als Länge) in dem Einritt in den Anschussnippel.

Damit wird erstens erreicht, dass der untere Abfluss 13 als Hauptabfluss wirkt und im Bedarfsfall auch ohne Unterstützung durch den oberen Abfluss 12 ausreicht. Darüber hinaus fließen durch die Leitung 16 querschnittsbedingt nur relativ geringe Wassermengen, was in Verbindung mit der deutlich vergrößerten Querschnittsfläche des Abflusses 12 auf den ersten Wegstrecken durch den Anschlussnippel 14 eine langsame Strömung dort und ein geringes Risiko des Mitreißens von schwebenden Partikeln bedingt. Andererseits kann der obere Abfluss 12 etwaige Luft- oder Gasbläschen leicht abführen. Diese können damit weder die Funktion des Durchlauferhitzers 2 noch des eigentlichen Hauptabflusses 13 beeinträchtigen.

Der Hauptabfluss 13 wiederum kann sedimentierte Partikel mitnehmen und wird durch diese aufgrund seiner großzügigen Dimensionierung kaum gefährdet.

Die Leitungen 16 und 17 sind, wie Figur 4 in Verbindung mit Figuren 1 und 2 deutlich zeigt, kurz vor dem Wassereintritt in den Partikelfilter 1 zusammengeführt, und zwar durch eine entsprechende Ausgestaltung eines integrierten Anschlussnippels des Rohrstücks 4 außerhalb des Flansches 6. Damit tritt das geheizte Wasser gemeinsam in das Innere dieses Rohrstücks 4 ein. Wie Figur 3 am besten zeigt, ist das Rohrstück 4 innerhalb des zylindrischen Gehäuses des Partikelfilters 1 einerseits gittertörmig, d. h. mit ungefähr rechteckigen Durchbrechungen, und innerhalb dieser Durchbrechungen siebartig aufgebaut. Die Öffnungen bilden Sieblöcher für den Wasserdurchtritt nach außen. Ein Teil der Rippen zwischen diesen Öffnungen ist in Figur 4 zur Vereinfachung der Darstellung weggelassen.

Am distalen Ende des zylindrischen Partikelfiltergehäuses ist ein in den Figuren nicht belegter Anschlussnippel 18 gezeigt, der beispielsweise an ein Ventil oder über eine Leitung zu einem weiter entfernt liegenden Ventil führen könnte. Jedenfalls ist dieser Pfad im normalen Betrieb verschlossen. Andererseits erkennt man in den Figuren einen ebenfalls unbelegt gezeichneten Anschlussnippel 19, der von dem zylindrischen Gehäuse des Partikelfilters 1 aus radial nach oben absteht. Durch diesen gelangt gefiltertes und erhitztes Wasser weiter zum eigentlichen Duschkopf.

Gelegentlich kann der Pfad über den Anschlussnippel 18 geöffnet werden. Dann strömt Wasser axial längs des Rohrstücks 4 und längs der Filteröffnungen dort hinaus, sodass dieser Anschlussnippel 18 eine Partikelabführöffnung bildet. Dazu kann der Pfad über den Anschlussnippel 19 geschlossen sein, dies ist aber nicht zwingend erforderlich.

## Patentansprüche

1. Duscheinrichtung für ein Bidet oder WC, mit
- einem Wassererhitzer (2) zum Erwärmen von Duschwasser und zum Anschluss an eine Wasserversorgung (9, 10) und
- einem mechanischen Partikelfilter (1) für Duschwasser,
**dadurch gekennzeichnet, dass** der Partikelfilter (1) stromabwärts an dem Wassererhitzer (2) angeschlossen ist und zum Filtern von durch den Wassererhitzer (2) erwärmtem Duschwasser ausgelegt ist.

2. Duscheinrichtung nach Anspruch 1, bei der der Partikelfilter (1) einen Raum stromaufwärts von den Filteröffnungen des Partikelfilters (1) mit einer zu öffnenden Partikelabführöffnung (18) aufweist, der durch Umlenken einer Strömung spülbar ist, sodass stromaufwärts von den Filteröffnungen gesammelte Partikel von der Strömung durch die Partikelabführöffnung (18) abgeführt werden können.

3. Duscheinrichtung nach Anspruch 2, bei der die Filteröffnungen in einem Rohrstück (4) vorgesehen sind, dass in einem dazu längsparallelen Gehäuse (3) gehalten ist, wobei ein Zufluss in das Rohrstück (4) mündet und die Partikelabführöffnung (18) am entgegengesetzten Ende des Rohrstückes (4) mit dem Rohrinneren kommuniziert und ein Filterabfluss (19) für gefiltertes Wasser von dem Filtergehäuse (3) außerhalb des Rohres abzweigt.

4. Duscheinrichtung nach einem der vorstehenden Ansprüche, bei der der Wassererhitzer ein Durchlauferhitzer (2) ist.

5. Duscheinrichtung nach einem der vorstehenden Ansprüche, bei der der Wassererhitzer (2) ein Wasservolumen begrenzt und einen unteren Abfluss (13) und einen oberen Abfluss (12) aufweist, wobei der obere Abfluss (12) vorzugsweise innerhalb der obersten 10 % und der untere Abfluss (12) vorzugsweise innerhalb der untersten 10 % der Höhe des Wasservolumens angeordnet ist.

6. Duscheinrichtung nach Anspruch 5, bei der zumindest einer der Abflüsse (12, 13) für eine Wasserströmungsrichtung ausgelegt ist, die einen Winkel von mindestens 30° zur Horizontalen bildet.

7. Duscheinrichtung nach Anspruch 5 oder 6, bei der sich der Leitungsquerschnitt des oberen Abflusses (12) In einem Abstand von dem Wasservolumen des Wassererhitzers (2) von mindestens dem anfänglichen mittleren Durchmesser des Abflusses (12) verjüngt, und zwar flächenbezogen um mindestens 70%.

8. Duscheinrichtung nach einem der Ansprüche 5 bis 7, bei der der Leitungsquerschnitt des unteren Abflusses (13) flächenbezogen um mindestens 30 % größer als der des oberen Abflusses (12) ist, und zwar jeweils bezogen auf die engste Stelle bis zu dem Partikelfilter (1) oder, falls der obere Abfluss unter Umgehung eines Filters direkt an einem Duschkopf angeschlossen ist, bis zu diesem Duschkopf.

9. Duscheinrichtung nach einem der Ansprüche 5 bis 8, bei der die sich an den oberen (12) und den unteren Abfluss (13) anschließenden Leitungen (16, 17) vor dem Partikelfilter (1) zusammengeführt sind.

10. Duscheinrichtung nach einem der vorstehenden Ansprüche, bei der der Partikelfilter (1) und der Wassererhitzer (2) parallele, jeweils im Wesentlichen zylindrische und baulich verbundene Gehäusekörper (3) aufweisen.

11. Duscheinrichtung nach Anspruch 10, bei der der Partikelfilter (1) und der Wassererhitzer (2) ein einstückiges gemeinsames Spritzgussgehäuse (3) aufweisen.

12. Duscheinrichtung nach Anspruch 4, auch in Verbindung mit einem weiteren der Ansprüche 5 bis 11, bei der der Durchlauferhitzer (2) als Wärmequelle ein in einem Wasservolumen des Durchlauferhitzers (2) liegendes und vorzugsweise zu im koaxial-parallel angeordnetes Rohrstück (5) mit einem Anschluss, insbesondere Zulauf in das Rohrstück (5) hinein aufweist, wobei ein zu dem Zulauf distales Ende des Rohrstückes (5) einen Abstand von einer benachbarten Innenwand des Wasservolumens aufweist, sodass das Wasser aus dem Rohrinneren zu einem das Rohrstück (4) umgebenden Raum des Wasservolumens und darin mit entgegengesetzter Richtung im Verhältnis zu dem Rohr inneren zu einem weiteren Anschluss, insbesondere Abfluss (12, 13), strömen kann oder umgekehrt.

13. Duscheinrichtung nach Anspruch 3 oder 12, auch in Verbindung mit einem weiteren der vorstehenden Ansprüche, bei der zumindest eines von dem Wärmequellenrohrstück (5) und dem die Filteröffnungen aufweisenden Rohrstück (4) in das entsprechende Gehäuse des Durchlauferhitzers bzw. des Partikelfilters durch eine Gehäuseöffnung hindurch eingebaut und mit einem mit dem Rohrstück (4, 5) integral ausgeführten Flansch (6, 7) an einer die Gehäuseöffnung umgebenden Fläche gehalten ist.

14. Dusch-WC mit einer Duscheinrichtung nach einem der Ansprüche 1 bis 13.

15. Verwendung einer Duscheinrichtung nach einem der Ansprüche 1 bis 13 für ein Dusch-WC oder ein Bidet.
